# EUROPEAN PATENT SPECIFICATION

(11) **EP 1 845 663 B1**
(45) Date of publication and mention of the grant of the patent: **19.08.2009**
(21) Application number: 07100331.3
(22) Date of filing: 10.01.2007
(51) Int. Cl.: H04L 12/28

(54) **Communication access apparatus**
Kommunikationszugangsvorrichtung
Appareil d'accès de communication

(30) Priority: 10.04.2006 CN 200620019072 U
(43) Date of publication of application: 17.10.2007
(73) Proprietor: Huawei Technologies Co., Ltd., Bantian-Longgang District Guangdong 518129 (CN)
(72) Inventor: Yang, Tao, c/o Huawei Technologies Co., Ltd., 518129, Guangdong (CN)
(74) Representative: Thun, Clemens

(56) References cited:
- WO-A-99/52237
- GB-A- 2 131 654
- US-A- 5 796 729
- US-A1- 2003 161 453
- US-B1- 6 181 694

## Description

### Field of the Invention

The present invention relates to the communications technology, and in particular, to a communication access apparatus.

### Background of the Invention

In existing communication networks, a terminal device may access a core layer via a communication access apparatus located in an access layer to access services provided by the core layer. To be specific, the terminal devices can be categorized into wired terminal devices and wireless terminal devices. The communication access apparatus providing access service for the wired terminal device is called a wired access apparatus, such as a Digital Subscriber Line Access Multiplexer (DSLAM); the communication access apparatus providing access service for the wireless terminal device is called a wireless access apparatus, such as a Broadband Wireless Access (BWA) apparatus.

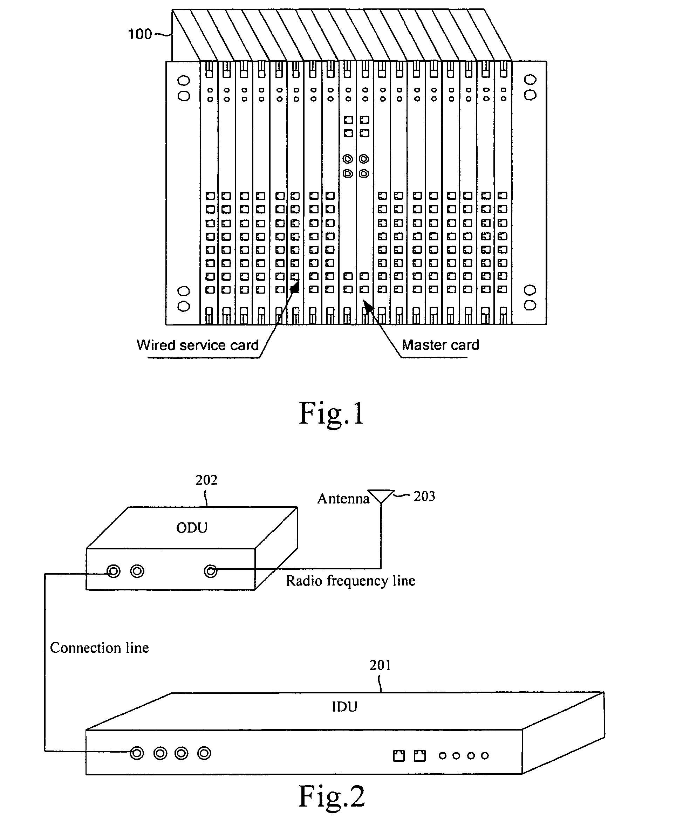

An external structure of the wired access apparatus is shown in Fig.1. In Fig.1, one or more master cards and wired service cards are configured in wired access apparatus 100, respectively. The wired service card is connected to a device in user side via such connection line as a twisted-pair line, a category 5 (CAT5) line or an optical fiber, and the device in user side may be a terminal device used by a user or an intermediate device such as a modem connected with the terminal device; the master card is connected to the wired service card via a communication bus and is connected to the communication device of core layer via a communication interface set in the master card per se, which is used for supporting the interaction between the terminal device and the communication device of core layer via the wired service card, so that services provided by the core layer can be accessed. To be specific, a wired service processing unit processing wired services is set in the wired service card; a service converging and controlling unit is set in the master card and the service converging and controlling unit is used to make service data from the wired service card converged and control the communication of the wired service card.

As shown in Fig.1, wired access apparatus 100, in which a wired service card is set, supports wired services, which enables the wired terminal device to access the core layer via wired access apparatus 100 so that the services provided by the core layer can be accessed, and the wired terminal device has a wired connection with wired access apparatus 100. However, since the service processing unit supporting wireless services is not set in wired access apparatus 100, wired access apparatus 100 can not support a wireless terminal device to access the core layer.

The external structure of a wireless access apparatus is shown in Fig.2. In Fig.2, a wireless access apparatus contains Indoor Unit (IDU) 201, Outdoor Unit (ODU) 202 and Antenna 203. At least one wireless service processing unit and service converging and controlling unit which are interconnected via the communication bus are incorporated in IDU 201; the wireless service processing unit is connected to ODU 202 via a connection line such as a medium frequency line, a CAT5 line or an optical fiber, and ODU 202 is connected to Antenna 203 via a radio frequency line so as to enable a wireless terminal device to interact with IDU 201 via Antenna 203 and ODU 202. Moreover, the service converging and controlling unit is connected to the communication device of the core layer via a communication interface, which supports the interaction between the wireless terminal device and the communication device of core layer via the wireless service processing unit, so that services provided by the core layer can be accessed. The communication interface is set in the service converging and controlling unit per se.

As shown in Fig.2, a wireless access apparatus including IDU 201, ODU 202 and Antenna 203 supports wireless services, which enables a wireless terminal device to access the core layer via the wireless access apparatus, so that services provided by the core layer can be accessed. The wireless terminal device has a wireless connection with the wireless access apparatus. However, since no service processing unit supporting wired services is set in the wireless access apparatus, the wireless access apparatus does not support a wired terminal device to access the core layer.

As can be seen from the above, an existing wireless access apparatus only supports wireless services rather than wired services while a wired access apparatus only supports wired services rather than wireless services. At present there have been no communication access apparatus supporting both wired services and wireless services, which restricts the service extension of operators to a certain extent and lowers the flexibility of providing services by operators.

In the prior art, a system for multiple mode voice and data communication using intelligently bridged TDM and packet buses is disclosed, referring to an US patent whose publication number is US-B1-6181694. In the abovementioned system, the TDM bus is set between the card and the processor/system resource, and the packet bus is set between the processor/system resource and the card via the TDM bus.

### Summary of the invention

An embodiment of the present invention provides an apparatus of communication access, which supports both wired services and wireless services.

A communication access apparatus includes:
a wired service processing unit adapted to process wired services; a wireless service processing unit adapted to process wireless services;
and the communication access apparatus further includes: a TDM converging and controlling unit connected to the wired service processing unit and the wireless service processing unit over a TDM bus, and connected to a core layer by a TDM interface, and the TDM converging and controlling unit is adapted to converge service data from the wired service processing unit and the wireless service processing unit to the TDM interface, and perform communication controls on the service data from the TDM interface to the wired service processing unit and the wireless service processing unit;
an IP converging and controlling unit connected to the wired service processing unit and the wireless service processing unit over a packet bus, and connected to the core layer by an IP interface, and the IP converging and controlling unit is adapted to converge service data from the wired service processing unit and the wireless service processing unit to the IP interface, and perform communication controls on the service data from the IP interface to the wired service processing unit and the wireless service processing unit.

Preferably, the packet bus is any one selected from the group comprising a Fast Ethernet (FE) bus, a Gigabit Ethernet (GE) bus, a Cell Bus, and a Low-Voltage Differential Signal (LVDS) bus.

Preferably, the wireless service processing unit is connected to an outdoor unit supporting an interaction between a wireless terminal device and the wireless service processing unit.

Preferably, the TDM converging and controlling unit supports the TDM protocol; and the IP converging and controlling unit supports the IP protocol.

Preferably, the wired service processing unit comprises at least one selected from the group comprising a Plain Old Telephone Service (POTS) service processing unit, a Digital Subscriber Line (DSL) service processing unit, an Ethernet service processing unit, and a Passive Optical Network (PON) service processing unit.

Preferably, the wireless service processing unit comprises a World Interoperability for Microwave Access (WIMAX) service processing unit.

Compared with the technology in the prior art, the communication access apparatus in accordance with the present invention includes a converging and controlling unit, a wired service processing unit and a wireless service processing unit which are connected with the converging and controlling unit; the converging and controlling unit is used to make the service data from the wired service processing unit and the wireless service processing unit converged, respectively, and perform communication controls to the wired service processing unit and the wireless service processing unit; the wired service processing unit is used for processing wired services; and the wireless service processing unit is used for processing wireless services.

It can be seen from the above that the communication access apparatus in accordance with the embodiment of the invention supports both wired services and wireless services, which is favourable for the service expansion of operators and greatly improves the flexibility of providing services by operators and the satisfaction of users.

### Brief Description of the Drawings

Fig.1 is a schematic diagram illustrating the external structure of a wired access apparatus in the prior art.
Fig.2 is a schematic diagram illustrating the external structure of a wireless access apparatus in the prior art.
Fig.3 is a schematic diagram illustrating the external structure of the communication access apparatus in accordance with an embodiment of the present invention.
Fig.4 is a schematic diagram illustrating the external structure of the communication access apparatus in accordance with another embodiment of the present invention.
Fig.5 is a schematic diagram illustrating the internal structure and principle of the rack illustrated in Fig.3 and Fig.4.

### Detailed Description of the Embodiments

The present invention is described in detail with reference to accompanying drawings and specific embodiments.

A communication access apparatus in accordance with the embodiments of the present invention mainly includes a converging and controlling unit, a wired service processing unit and a wireless service processing unit which are connected with the converging and controlling unit; the converging and controlling unit is used for making the service data from the wired service processing unit and the wireless service processing unit converged, respectively, and controlling communication of the wired service processing unit and the wireless service processing unit; the wired service processing unit is used for processing wired services; and the wireless service processing unit is used for processing wireless services.

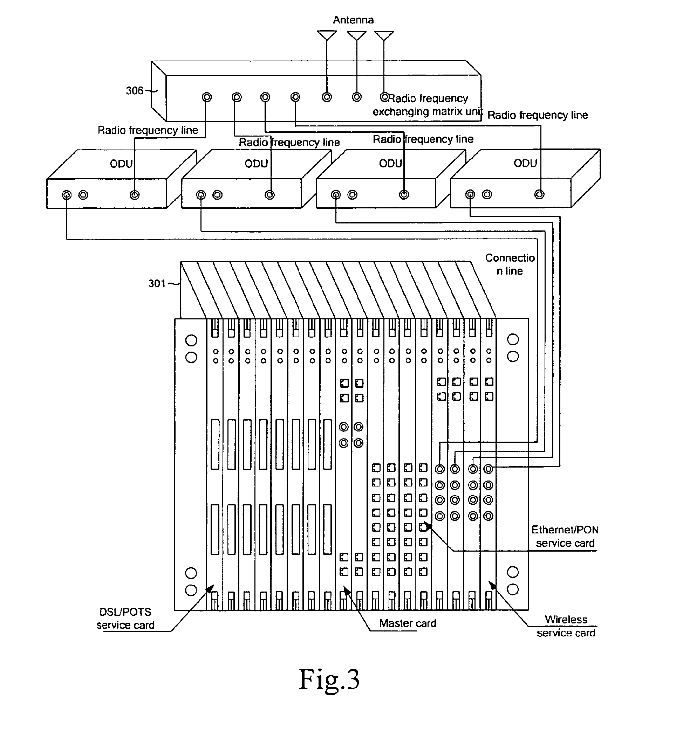

Fig.3 is a schematic diagram illustrating the external structure of the communication access apparatus in accordance with an embodiment of the present invention. In Fig.3, Rack 301, ODUs, radio frequency exchanging matrix unit 306 and antennas constitute a communication access apparatus. Master cards, Digital Subscriber Line (DSL)/POTS service cards, Ethernet/PON service cards and wireless service cards are set in Rack 301. The DSL/POTS service card and the Ethernet/PON service card are both wired service cards, and the difference therebetween is that different wired services are supported by different wired service cards, respectively, for example, a DSL/POTS service card supports DSL/POTS services while an Ethernet/PON service card supports Ethernet/PON services. The wireless service card set in Rack 301 may be an existing WIMAX service card.

The quantity of master card, wired service card and wireless service card set in Rack 301 all may be one or more than one, and, various wired service cards may support the same or different wired services; likewise, various wireless service cards may support the same or different wireless services.

To be specific, a service converging and controlling unit is set in the master card, and the service converging and controlling unit is used to make the service data from wired service cards and wireless service cards converged, and the service converging and controlling unit is used to control the communication of wired service cards and wireless service cards. In actual applications, when converging the data, the service converging and controlling unit does not need to make detailed processing to data of the wired or wireless services just like the wired service card or the wireless service card makes processing to data, so that the methods for making data from the wired service card and the wireless service card converged by the service converging and controlling unit are generally uniform; likewise, when controlling the wired service card and the wireless service card, the service converging and controlling unit only needs to configure parameters for the wired service cards and the wireless service cards, etc, instead of making detailed processing to the wired service of the wired service card and the wireless service of the wireless service card, so that the methods for controlling communications of the wired service card and the wireless service card by the service converging and controlling unit are also generally uniform.

Moreover, a wired service processing unit processing wired services is set in the wired service card, for example: a POTS service processing unit or a DSL service processing unit, etc. The wired service card is connected to a device in user side via a connection line such as a twisted-pair line, a CAT5 line, or an optical fiber, and the device in user side may be a terminal device used by a user or an intermediate device such as a modem connected with the terminal device; and the service converging and controlling unit is connected to the wired service processing unit set in the wired service card via a communication bus; and the service converging and controlling unit is also connected to the communication device of a core layer via a communication interface, which is used for supporting the interaction between a terminal device and the communication device of core layer via the wired service processing unit set in the wire service card, so that the services provided by the core layer can be accessed. The communication bus may be an FE bus, a GE bus, a Cell Bus, an LVDS bus or a TDM bus. The communication interface and the service converging and controlling unit are set in the master card.

It can be seen from the above that master cards and wired service cards are set in Rack 301, which enables the wired terminal device to access the core layer via the wired service access unit and the service converging and controlling unit set in the master card, so that the services provided by the core layer can be accessed, and the wired terminal device has a wired connection with a wired service access unit of the wired service card.

A wireless service processing unit processing wireless services, for example a WIMAX service processing unit, is set in the wireless service card of Rack 301. The wireless service processing unit is connected to an ODU via a connection line such as a medium frequency line, a CAT5 line or an optical fiber, and an ODU is connected to an antenna via a radio frequency line and radio frequency exchanging matrix unit 306, which enable the wireless terminal device to interact with the wireless service processing unit via an antenna, radio frequency exchanging matrix unit 306 and an ODU. The radio frequency exchanging matrix unit 306 is used to implement the redundancy backup between various ODUs and antennas illustrated in Fig.3; in actual applications, an ODU may also be connected to an antenna directly without connecting to radio frequency exchanging matrix unit 306. The wireless service processing unit is set in the wireless service card.

Moreover, the service converging and controlling unit set in the master card is connected to the wireless service processing unit via a communication bus. The communication bus may be an FE bus, a GE bus, a Cell Bus, a LVDS bus or a TDM bus.

It can be seen from the above that master cards and wireless service cards are set in Rack 301, which enables the wireless terminal device to access the core layer via the wireless service access unit and the service converging and controlling unit set in the master card, so that the services provided by the core layer can be accessed, and the wireless terminal device has a wireless connection with a wireless service access unit set in the wireless service card via an antenna, radio frequency exchanging matrix unit 306 and an ODU.

As can be seen from the above, in Fig.3 master cards, wired service cards and wireless service cards are set in Rack 301, which enables the communication access apparatus including Rack 301, ODUs, radio frequency exchanging matrix unit 306 and antennas to support both wired services and wireless services.

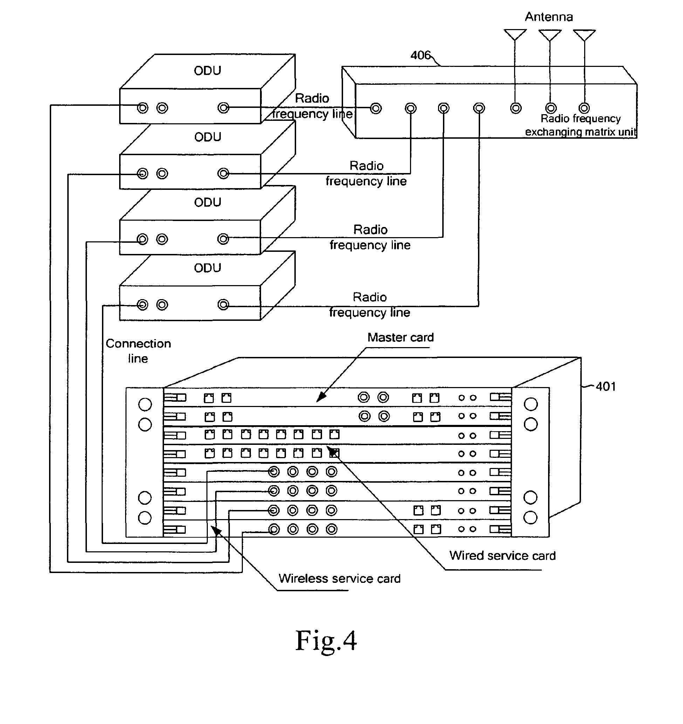

In Fig.3, master cards, wired service cards and wireless service cards set in Rack 301 are all of a vertical structure. In actual applications, master cards, wired service cards and wireless service cards can also be set in a horizontal structure as shown in Fig.4. The structure, connecting relations of components and function of the communication access apparatus including Rack 401, ODUs, radio frequency exchanging matrix unit 406 and antennas illustrated in Fig.4 is the same as that of the communication access apparatus including Rack 301, ODUs, radio frequency exchanging matrix unit 306 and antennas illustrated in Fig.3, except that the master cards, the wired service cards and the wireless service cards illustrated in Fig.3 are all of the vertical structure while the master cards, wired service cards and wireless service cards described in Fig.4 are all of the horizontal structure.

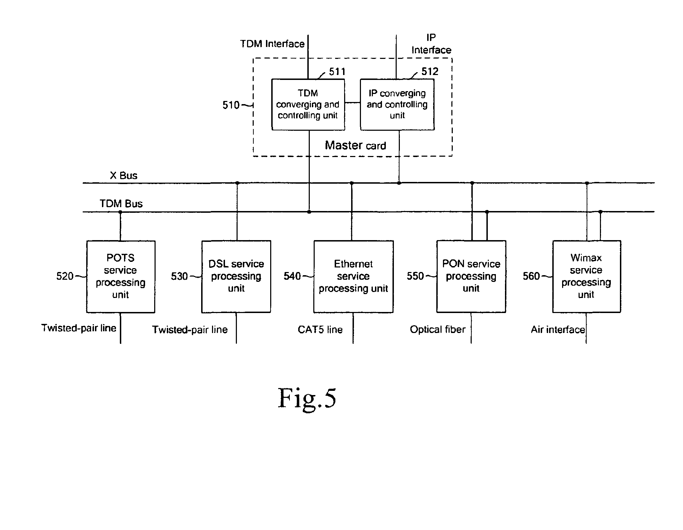

Actually, only the external structures of communication access apparatus in accordance with two embodiments of the present invention are shown in Fig.3 and Fig.4 while no internal structures of these communication access apparatus are shown. The internal structure and principle of the rack illustrated in Fig.3 and Fig.4 is hereinafter described in detail by taking Fig.5 as an example, so as to make the description more apparent.

In Fig.5, TDM converging and controlling unit 511 supporting the TDM protocol and Internet Protocol (IP) converging and controlling unit 512 supporting the IP are both set in the converging and controlling unit set in master card 510, and TDM converging and controlling unit 511 can conduct the communication interaction with IP converging and controlling unit 512 via the connection provided in the prior art. Apart from the existing TDM converging and controlling unit and IP converging and controlling unit, other converging and controlling units may be set as long as the set converging and controlling unit can converge the data and control the service card normally; and, the set converging and controlling units can be located in different master cards, respectively, or be all located in master card 510, or some of the set converging and controlling units may be located in one master card.

POTS service processing unit 520, DSL service processing unit 530, Ethernet service processing unit 540 and PON service processing unit 550 are all wired service processing units. In actual applications, one or more kinds of the above wired service processing unit can be set in the rack of the communication access apparatus, the quantity of each kind of wired service processing unit can be one or more than one; various wired service processing units can support the same or different wired services, for example only one POTS service processing unit is set in the rack, or one POTS service processing unit, one Ethernet service processing unit and three PON service processing units are set in the rack; and, the set wired service processing units can be located in different wired service cards, respectively, alternatively, some of the set wired service processing units can be located in the same wired service card.

WIMAX service processing unit 560 is a wireless service processing unit; apart from WIMAX service processing unit 560, one or more wireless service processing units that support other communication protocols and make processing of wireless services may be set. It can be seen from the above that the setting manner of wireless service processing unit is similar to that of wired service processing unit, i.e. one or more wireless service processing units can be set in the rack of the communication access apparatus, and different wireless service processing units can support the same or different wireless services; and, the set wireless service processing units can be located in different wireless service cards, respectively, alternatively, some of the set wireless service processing units may be located in the same wireless service card.

Moreover, the converging and controlling unit is connected to the wired service processing unit and the wireless service processing unit via a communication bus, so as to enable the converging and controlling unit to converge the data from the wired service processing unit and the wireless service processing unit via the communication line and to control the communication of wired service processing unit and wireless service processing unit via the communication bus. To be specific, TDM converging and controlling unit 511 is connected to a wired service processing unit such as POTS service processing unit 520 and PON service processing unit 550 via the TDM bus, and is connected to a wireless service processing unit such as WIMAX service processing unit 560 via the TDM bus; IP converging and controlling unit 512 is connected to a wired service processing unit such as DSL service processing unit 530, Ethernet service processing unit 540, PON service processing unit 550 via an X bus, and is connected to a wireless service processing unit such as WIMAX service processing unit 560 via an X bus. The X bus may be an FE bus, a GE bus, a Cell Bus or a LVDS bus.

In addition, the wired service processing units such as POTS service processing unit 520, DSL service processing unit 530, Ethernet service processing unit 540 and PON service processing unit 550 illustrated in Fig.5 can also be connected to a device in user side via a twisted-pair line, a CAT5 line or an optical fiber; the wireless service processing unit such as WIMAX service processing unit 560 illustrated in Fig.5 can also establish a wireless connection with the wireless terminal device via an ODU and an antenna.

Moreover, the converging and controlling unit illustrated in Fig.5 can also be connected to a communication device of the core layer via a communication interface. To be specific, TDM converging and controlling unit 511 is connected to a communication device of the core layer via the TDM interface; IP converging and controlling unit 512 is connected to a communication device of the core layer via the IP interface.

As can be seen from the above, the communication access apparatus including the converging and controlling units, wired service processing units, wireless service processing units, ODUs and antennas supports both wired services and wireless services.

The above mentioned are only preferred embodiments of the present invention, which are not used for limiting the protection scope of the present invention as defined by the following claims.

## Claims

1. A communication access apparatus providing access to a core layer, comprising:
a wired service processing unit (520,530,540,550) adapted to process wired services;
a wireless service processing unit (560) adapted to process wireless services;
wherein the communication access apparatus **characterized in that** the communication access apparatus further comprises:
a Time-Division Multiplexing, TDM, converging and controlling unit (511) connected to the wired service processing unit and the wireless service processing unit over a TDM bus, and connected to the core layer by a TDM interface, wherein the TDM converging and controlling unit (511) is adapted to converge service data from the wired service processing unit and the wireless service processing unit to the TDM interface, and perform communication controls on the service data from the TDM interface to the wired service processing unit and the wireless service processing unit;
an Internet Protocol, IP, converging and controlling unit (512) connected to the wired service processing unit and the wireless service processing unit over a packet bus, and connected to the core layer by an IP interface, wherein the IP converging and controlling unit (512) is adapted to converge service data from the wired service processing unit and the wireless service processing unit to the IP interface, and perform communication controls on the service data from the IP interface to the wired service processing unit and the wireless service processing unit.

2. The communication access apparatus of claim 1, wherein the packet bus is any one selected from the group comprising a Fast Ethernet bus, a Gigabit Ethernet bus.

3. The communication access apparatus of claim 1, wherein the wireless service processing unit is connected to an outdoor unit supporting an interaction between a wireless terminal device and the wireless service processing unit.

4. The communication access apparatus of any of claims 1 to 3, wherein TDM converging and controlling unit supports a TDM protocol; and the IP converging and controlling unit supports an IP protocol.

5. The communication access apparatus of any of claims 1 to 4, wherein the wired service processing unit comprises at least one selected from the group comprising a Plain Old Telephone Service, POTS, service processing unit (520), a Digital Subscriber Line, DSL, service processing unit (530), an Ethernet service processing unit (540), and a Passive Optical Network, PON, service processing unit (550).

6. The communication access apparatus of any of claims 1 to 4, wherein the wireless service processing unit comprises a World Interoperability for Microwave Access, WIMAX, service processing unit (560).

## Patentansprüche

1. Kommunikationszugangsvorrichtung, die Zugriff auf eine Kernschicht bereitstellt, umfassend:
eine verdrahtete Dienstverarbeitungseinheit (520,530,540,550), die geeignet ist, drahtgebundene Dienste abzuwickeln;
eine drahtlose Dienstverarbeitungseinheit (560), die geeignet ist, drahtlose Dienste abzuwickeln;
wobei die Kommunikationszugangsvorrichtung **dadurch gekennzeichnet ist, dass** die Kommunikationszugangsvorrichtung ferner umfasst:
eine Einheit zum Konvergieren und zum Steuern des Time-Division-Multiplexens (511), TDM-Konvergier- und -Steuerungseinheit, die über einen TDM-Bus mit der verdrahteten Dienstverarbeitungseinheit und mit der drahtlosen Dienstverarbeitungseinheit verbunden ist, und die durch eine TDM-Schnittstelle mit der Kernschicht verbunden ist, wobei die TDM-Konvergier- und -Steuerungseinheit (511) geeignet ist, Dienstdaten von der verdrahteten Dienstverarbeitungseinheit und der drahtlosen Dienstverarbeitungseinheit zu der TDM-Schnittstelle zusammen zu führen und Kommunikationssteuerungen der Dienstdaten von der TDM-Schnittstelle zu der verdrahteten Dienstverarbeitungseinheit und der drahtlosen Dienstverarbeitungseinheit durchzuführen;
eine Einheit zum Konvergieren und Steuern des Internet Protokolls (512), IP-Konvergier- und -Steuerungseinheit, die mit der verdrahteten Dienstverarbeitungseinheit und der drahtlosen Dienstverarbeitungseinheit über einen Datenpaket-Bus verbunden ist, und die mit der Kernschicht durch eine IP-Schnittstelle verbunden ist, wobei die Konvergier- und -Steuerungseinheit Einheit (512) geeignet ist, Dienstdaten von der verdrahteten Dienstverarbeitungseinheit und der drahtlosen Dienstverarbeitungseinheit zu der IP-Schnittstelle zusammen zu führen und Kommunikationssteuerungen der Dienstdaten von der IP-Schnittstelle zu der verdrahteten Dienstverarbeitungseinheit und der drahtlosen Dienstverarbeitungseinheit durchzuführen.

2. Kommunikationszugangsvorrichtung nach Anspruch 1, wobei der Datenpaket-Bus aus der Gruppe, die einen Fast-Ethernet-Bus und einen Gigabit-Ethernet-Bus umfasst, ausgewählt ist.

3. Kommunikationszugangsvorrichtung nach Anspruch 1, wobei die drahtlose Dienstverarbeitungseinheit mit einer Outdoor-Einheit verbunden ist, die eine Interaktion zwischen einer drahtlosen Terminalvorrichtung und der drahtlosen Dienstverarbeitungseinheit unterstützt.

4. Kommunikationszugangsvorrichtung nach einem der Ansprüche 1 bis 3, wobei die TDM-Konvergier- und -Steuerungseinheit ein TDM-Protokoll unterstützt; und die IP-Konvergier- und -Steuerungseinheit ein IP-Protokoll unterstützt.

5. Kommunikationszugangsvorrichtung nach einem der Ansprüche 1 bis 4, wobei die verdrahtete Dienstverarbeitungseinheit zumindest eine Einheit umfasst, die ausgewählt ist aus der Gruppe, die eine Plain-Old-Telephone-Service-Dienstverarbeitungseinheit (520), POTS-Dienstverarbeitungseinheit, eine Digital-Subscriber-Line-Dienstverarbeitungseinheit (530), DSL-Dienstverarbeitungseinheit, eine Ethernet-Dienstverarbeitungseinheit (540) und eine Passive-Optical-Network-Dienstverarbeitungseinheit (550) PON-Dienstverarbeitungseinheit, umfasst.

6. Kommunikationszugangsvorrichtung nach einem der Ansprüche 1 bis 4, wobei die drahtlose Dienstverarbeitungseinheit eine World Interoperability-for-Microwave-Access-Dienstverarbeitungseinheit (560), WIMAX-Dienstverarbeitungseinheit, umfasst.

## Revendications

1. Appareil d'accès de communication fournissant l'accès à une couche de coeur, comprenant:
une unité de traitement de services câblés (520, 530, 540, 550) apte à traiter des services câblés;
une unité de traitement de services sans fil (560) apte à traiter des services sans fil;
où l'appareil d'accès de communication, **caractérisé en ce que** l'appareil d'accès de communication comprend en outre:
une unité de convergence et de commande de Multiplexage par répartition dans le temps, TDM (511) connectée à l'unité de traitement des services câblés et l'unité de traitement de services sans fil par un bus TDM, et connectée à la couche de coeur par une interface TDM, où l'unité de convergence et de commande TDM (511) est apte à faire converger des données de service de l'unité de traitement des services câblés et de l'unité de traitement de services sans fil à l'interface TDM, et exécuter des commandes de communication sur les données de service de l'interface TDM à l'unité de traitement des services câblés et à l'unité de traitement de services sans fil;
une unité de convergence et de commande de protocole Internet, IP (512) connectée à l'unité de traitement des services câblés et à l'unité de traitement des services sans fil par un bus paquet, et connectée à la couche de coeur par une interface IP, où l'unité de convergence et de commande IP (512) est apte à faire converger des données de service de l'unité de traitement des services câblés et de l'unité de traitement des services sans fil à l'interface IP, et exécuter des commandes de communication sur les données de service de l'interface IP à l'unité de traitement des services câblés et à l'unité de traitement des services sans fil.

2. Appareil d'accès de communication selon la revendication 1, où le bus paquet est un quelconque sélectionné dans le groupe comprenant un bus Ethernet Rapide, un bus Gigabit Ethernet.

3. Appareil d'accès de communication selon la revendication 1, où l'unité de traitement des services sans fil est connectée à une unité extérieure supportant une interaction entre un dispositif terminal sans fil et l'unité de traitement des services sans fil.

4. Appareil d'accès de communication selon l'une quelconque des revendications 1 à 3, où l'unité de convergence et de commande TDM supporte un protocole TDM; et l'unité de convergence et de commande IP supporte un protocole IP.

5. Appareil d'accès de communication selon l'une quelconque des revendications 1 à 4, dans lequel l'unité de traitement des services câblés comprend au moins un sélectionné dans le groupe comprenant un service téléphonique ordinaire POTS, une unité de traitement de services (520), une Ligne d'Abonnés Numériques DSL, une unité de traitement de services (530), une unité de traitement de services Ethernet (540), et une unité de traitement de services de Réseau Optique Passif, PON (550).

6. Appareil d'accès de communication selon l'une quelconque des revendications 1 à 4, où l'unité de traitement des services sans fil comprend une Interopérabilité Mondiale pour l'Unité de Traitement des Services de la Technologie d'Accès WIMAX (560).
